# EUROPÄISCHE PATENTANMELDUNG

(11) **EP 0 963 886 A2**
(43) Veröffentlichungstag der Anmeldung: **15.12.1999**
(21) Anmeldenummer: 99110363.1
(22) Anmeldetag: 28.05.1999
(51) Int. Cl.: B60R 21/20

(54) **Airbagmodul für ein Fahrzeug**

(30) Priorität: 03.06.1998 DE 19824735
(71) Anmelder: Volkswagen Aktiengesellschaft, 38436 Wolfsburg (DE)
(72) Erfinder: Strauss, Michael, 38442 Wolfsburg (DE)

(57) **Zusammenfassung**

Die Erfindung bezieht sich auf ein Airbagmodul (5) für ein Fahrzeug, bestehend aus einem Gasgenerator (6) und einem damit aufblasbaren Airbag (7) in einem Modulgehäuse (8) mit einem Gehäuseausgang (13) zum Durchgang des aktivierten Airbags (7), wobei das Airbagmodul (5) in einem Fahrzeugteil (1) mit einer Airbagaustrittsöffnung (4) montierbar ist. Erfindungsgemäß wird auf dem Gehäuse (8) des Airbagmoduls (5) wenigstens ein Schutzlappen (9, 10) als Abdeck- und Gleitlappen aufgesetzt, der einseitig im Bereich des Gehäuseausgangs (13) fest und nicht ausreißbar angebracht ist und in einer Bereitschaftsstellung den Gehäuseausgang (13) abdeckt und der im montierten Zustand des Airbagmoduls (5) beim Gehäuseaustritt des Airbags (7) durch diesen nach außen zur Airbagaustrittsöffnung (4) des Fahrzeugteils (1) klappbar ist, wodurch zumindest ein Teil der Begrenzung der Airbagsaustrittsöffnung (4) am Fahrzeugteil (1) durch den Schutzlappen (9, 10) als Zwischenlage zum austretenden Airbag (7) abdeckbar ist. Dadurch wird ein Partikelflug durch die Verletzung der Begrenzung der Airbagaustrittsöffnung (4) verhindert und eine Verletzung der Airbagwand beim Aufblasen, wobei durch eine begünstigende Gleitfunktion ein schneller und gleichmäßiger Airbagaustritt erfolgt.

## Beschreibung

Die Erfindung betrifft ein Airbagmodul für ein Fahrzeug nach dem Oberbegriff des Anspruchs 1.

Ein allgemein bekanntes Airbagmodul besteht aus einem Gasgenerator und einem damit aufblasbaren Airbag in einem Modulgehäuse mit einem Gehäuseausgang zum Durchgang des aktivierten Airbags. Ein solches Airbagmodul ist in einem Fahrzeugteil montierbar, wobei das Fahrzeugteil das Airbagmodul aufnimmt und eine Airbagaustrittöffnung aufweist.

Die Wandungen und Begrenzungen solcher Airbagaustrittöffnungen können aus bruchgefährdetem Material bestehen, insbesondere wenn ein Airbagmodul beispielsweise für einen Seitenairbag in einer Armlehne oder einem Sitzteil aus Hartschaumstoff angeordnet ist (EP 0 819 587 A1). Bei einer Auffaltung und Befüllung des Airbags besteht dann die Gefahr, daß Kanten und/oder Wandteile der Airbagaustrittöffnung reißen und abbröckeln, was zu einem unerwünschten Partikeilflug im Innenraum führen kann.

Zudem können Begrenzungen von Airbagaustrittöffnungen von vorneherein relativ kantig sein oder durch Reißen oder Abbröckeln von Begrenzungsteilen beim Durchtritt des Airbags scharfkantig werden. Dadurch besteht die Gefahr, daß die Airbagwand verletzt und/oder das Aufblasverhalten ungünstig beeinflußt werden kann.

Aufgabe der Erfindung ist es, ein Airbagmodul so weiterzubilden, daß die Gefahr einer Verletzung von Wandteilen und Begrenzungen einer Airbagaustrittöffnung an einem Fahrzeugteil und/oder eine Verletzung einer Airbagwand und/oder eine ungünstige Beeinflussung des Aufblasverhaltens durch die Begrenzung einer Airbagaustrittöffnung reduziert wird.

Diese Aufgabe wird mit den Merkmalen des Anspruchs 1 gelöst.

Gemäß Anspruch 1 ist auf dem Modulgehäuse wenigstens ein Schutzlappen als Abdeck- und Gleitlappen aufgesetzt, der einseitig im Bereich des Gehäuseausgangs fest und nicht ausreißbar angebracht ist und den Gehäusesusgang abdeckt. Im montierten Zustand des Airbagmoduls wird der Schutzlappen beim Gehäuseaustritt des Airbags durch diesen nach außen zur Airbagaustrittöffnung des Fahrzeugs geklappt, wodurch zumindest ein Teil der Begrenzung der Airbagaustrittöffnung durch den Schutzlappen abgedeckt ist. Dieser liegt dabei als Zwischenlage zwischen Wand- und Kantenteilen der Airbagaustrittöffnung und der Airbagwand und hat hinsichtlich der Airbagaustrittöffnung eine Abdeckfunktion und hinsichtlich des Airbags eine, dessen Austritt begünstigende Gleitfunktion.

Ein solcher Schutzlappen ist besonders vorteilhaft, wenn die Begrenzung der Airbagaustrittöffnung am Fahrzeugteil aus bruchgefährdetem Material beispielsweise aus Hartschaumstoff besteht. Durch die Abdeckfunktion des Schutzlappens wird hier eine Verletzung der Begrenzung der Airbagaustrittöffnung verhindert, so daß ein Partikelflug in Verbindung mit dem Airbagaustritt verhindert wird. Ohne Verletzung der Begrenzung der Airbagaustrittöffnung treten dort auch keine scharfen Bruch- und/oder Rißkanten auf, so daß auch eine Verletzung der Airbagwand mit einer möglichen Beeinträchtigung der Airbagfunktion verhindert wird. Der Schutzlappen kann vielmehr Ungleichmäßigkeiten an der Begrenzung der Airbagaustrittöffnung ausgleichen, so daß ein schneller und gleichmäßiger Airbagaustritt begünstigt wird.

In vorteilhafter Weise erfordert die Anbringung eines solchen Schutzlappens keine merkliche Einbauraum- oder Gewichtsvergrößerung. Bei einer Anbringung des Schutzlappens auf dem Gehäuse können zudem bisherige Modulgehäuseausführungen unverändert weiter verwendet werden. Die Kosten für einen solchen Schutzlappen sind insgesamt gering, insbesondere da der Ausklappvorgang ohne zusätzliche Teile durch den ohnehin vorhandenen Airbag bewirkt wird.

Für eine Festlegung des Schutzlappens in einer Bereitschaftsposition vor dem Gehäuseausgang wird vorgeschlagen, zusätzlich zu der nicht ausreißbaren Befestigung am Modulgehäuse eine weitere, gegenüberliegende, leicht ausreißbare Befestigung vorzusehen. Damit wird insbesondere vor und bei der Montage des Airbagmoduls der Schutzlappen bereits in seiner geeigneten Bereitschaftsstellung vor dem Gehäuseausgang sicher gehalten. Bei der Aktivierung des Airbags reißt dann der Schutzlappen einseitig ab und wird um die nicht ausreißbare Befestigung auf die Begrenzung der Airbagaustrittöffnung am Fahrzeugteil geklappt.

Eine stabile, nicht ausreißbare Befestigung ist mit einfachen Mitteln als durchgehende Streifenbefestigung und die ausreißbare Befestigung als Punktbefestigung herstellbar. Je nach den Gegebenheiten können an der Begrenzung der Airbagaustrittöffnung insgesamt oder nur in Teilbereichen kantige und/oder bruchgefährdete Kanten- und Wandteile vorliegen. Für eine Abdeckung größerer Bereiche der Airbagaustrittöffnung wird vorgeschlagen, zwei oder mehrere Schutzlappen mit am Gehäuseumfang verteilten Befestigungsstellen vorzusehen, die überlappend vor dem Gehäuseausgang in der Bereitschaftsstellung übereinander liegen. Dadurch können je nach Lage und Anordnung der Schutzlappen und der Befestigungsstellen unterschiedliche Klapprichtungen bestimmt und unterschiedliche Bereiche der Airbagaustrittöffnung abgedeckt werden. Beispielsweise kann ein Schutzlappen nach oben und ein Schutzlappen nach unten aufklappbar gehalten sein.

Der oder die Schutzlappen werden vorzugsweise aus dem gleichen Material wie der Airbag hergestellt. In an sich bekannter Weise eignet sich dazu Polyethylenmaterial (PE). Der oder die Schutzlappen bestehen dann vorzugsweise aus PE-Gewebe und sind mit einem PE-Gehäuse verschweißt.

In einer anderen Ausführungsform können die Schutzlappen von vorneherein im Modulgehäuse integriert und vorzugsweise eingespritzt sein.

Anhand einer Zeichnung wird die Erfindung näher erläutert.

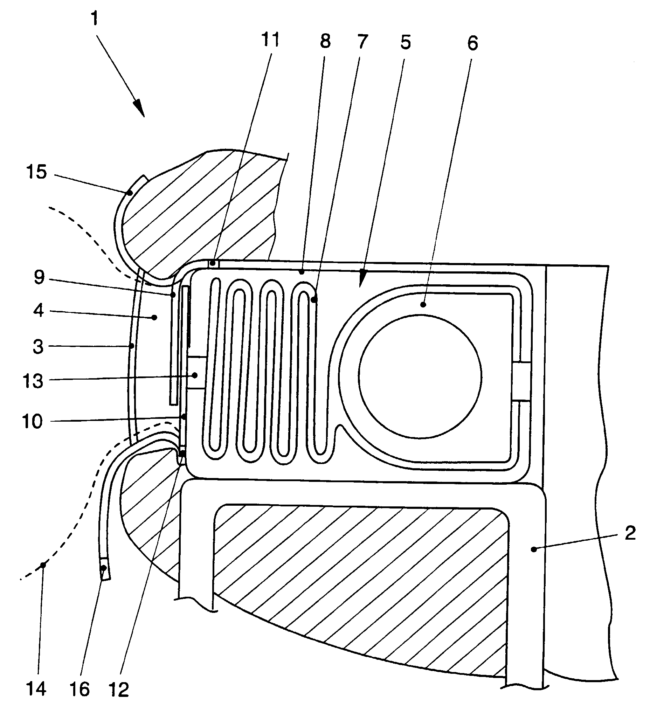

- Fig. 1: zeigt einen Querschnitt durch ein Fahrzeugteil mit einem erfindungsgemäßen Airbagmodul.

In einem Fahrzeugteil 1 aus Hartschaumstoff, das durch eine Halterung 2 mit der Fahrzeugkarosserie verbunden ist, beispielsweise einer Armlehne, befindet sich hinter einer Abdeckung 3 einer Airbagaustrittsöffnung 4 ein Airbagmodul 5 bestehend aus einem Gasgenerator 6 und einem aufblasbaren Airbag 7 in einem Modulgehäuse 8.

Die Abdeckung 3 ist hier beispielsweise als um ein Filmscharnier aufklappbarer Deckel dargestellt. Die Abdeckung 3 kann auch als aufreißbarer Überzug und/oder als vor dem Airbagmodul durchgehende, aufreißbare Schaumstoffwand des Fahrzeugteils 1 ausgebildet sein.

Auf dem Modulgehäuse 8 sind zwei Schutzlappen 9, 10 jeweils an einer Seite 11, 12 fest und nicht ausreißbar angebracht, die in einer Bereitschaftsstellung überlappend übereinanderliegen und den Gehäuseausgang 13 abdecken. Beim Befüllen des Airbags 7 tritt dieser durch den Gehäuseausgang 13 aus und klappt die beiden Schutzlappen 9, 10 in unterschiedliche Richtungen nach außen zur Airbagaustrittsöffnung 4 des Fahzeugteils 1, wodurch die obere und untere Begrenzung der Airbagaustrittsöffnung 4 am Fahrzeugteil 1 durch die Schutzlappen 9, 10 als Zwischenlage zum austretenden Airbag 7 abgedeckt werden. Strichliert sind der aufgeblasene Airbag 14 und die nach außen geklappten Schutzlappen (15, 16) dargestellt.

## Patentansprüche

1. Airbagmodul für ein Fahrzeug, bestehend aus einem Gasgenerator und einem damit aufblasbaren Airbag in einem Modulgehäuse mit einem Gehäuseausgang zum Durchgang des aktivierten Airbags, wobei das Airbagmodul in einem Fahrzeugteil mit einer Airbagaustrittöffnung montierbar ist,
**dadurch gekennzeichnet,**
daß auf dem Modulgehäuse (8) wenigstens ein Schutzlappen (9, 10) als Abdeck- und Gleitlappen aufgesetzt ist, der einseitig im Bereich des Gehäuseausgangs (13) fest und nicht ausreißbar angebracht ist und in einer Bereitschaftsstellung den Gehäuseausgang (13) abdeckt und der im montierten Zustand des Airbagmoduls (5) beim Gehäuseaustritt des Airbags (7) durch diesen nach außen zur Airbagaustrittöffnung (4) des Fahrzeugteils (1) klappbar ist, wodurch zumindest ein Teil der Begrenzung der Airbagaustrittöffnung (4) am Fahrzeugteil (1) durch den Schutzlappen (15, 16) als Zwischenlage zum austretenden Airbag (7, 14) abdeckbar ist.

2. Airbagmodul nach Anspruch 1, **dadurch gekennzeichnet**, daß im montierten Zustand des Airbagmoduls (5) zumindest ein Teil der Begrenzung der Airbagaustrittöffnung (4) am Fahrzeugteil (1) kantig ist und/oder aus bruchgefährdetem Material besteht.

3. Airbagmodul nach Anspruch 2, **dadurch gekennzeichnet**, daß das Fahrzeugteil (1) zur Aufnahme des Airbagmoduls (5) zumindest im Bereich der Airbagaustrittsöffnung (4) aus Hartschaumstoff besteht.

4. Airbagmodul nach einem der Ansprüche 1 bis 3, **dadurch gekennzeichnet**, daß der wenigstens eine Schutzlappen (9, 10) mit seinem aufklappbaren Bereich gegenüberliegend zur nicht ausreißbaren Befestigung (11, 12) am Modulgehäuse (8) leicht ausreißbar befestigt ist.

5. Airbagmodul nach Anspruch 4, **dadurch gekennzeichnet**, daß die eine nicht ausreißbare Befestigung (11, 12) als durchgehende Streifenbefestigung und die ausreißbare Befestigung als Punktbefestigung ausgebildet sind.

6. Airbagmodul nach einem der Ansprüche 1 bis 5, **dadurch gekennzeichnet**, daß zwei oder mehrere Schutzlappen (9, 10) durch am Gehäuseumfang verteilte, nicht ausreißbare Befestigungsstellen (11, 12) befestigt sind und in einer Bereitschaftsstellung überlappend übereinanderliegen und somit bei einer Airbagaktivierung in unterschiedliche Richtungen zur Abdeckung entsprechend liegender Bereiche der Airbagaustrittöffnung (4) aufklappbar sind.

7. Airbagmodul nach einem der Ansprüche 1 bis 6, **dadurch gekennzeichnet**, daß der wenigstens eine Schutzlappen (9, 10) aus dem gleichen Material wie der Airbag (7) besteht.

8. Airbagmodul nach einem der Ansprüche 1 bis 7, **dadurch gekennzeichnet**, daß der Schutzlappen (9, 10) aus PE-Gewebe besteht und mit einem PE-Gehäuse (8) verschweißt ist.

9. Airbagmodul nach einem der Ansprüche 1 bis 6, **dadurch gekennzeichnet**, daß der wenigstens eine Schutzlappen (9, 10) in das Modulgehäuse (8) mit eingespritzt ist.
